# EUROPÄISCHE PATENTSCHRIFT

(11) **EP 2 483 069 B1**
(45) Veröffentlichungstag und Bekanntmachung des Hinweises auf die Patenterteilung: **18.09.2013**
(21) Anmeldenummer: 10757758.7
(22) Anmeldetag: 20.09.2010
(51) Int. Cl.: B32B 3/10, B32B 27/28, B65D 75/32

(54) **REISSFESTE VERPACKUNGS-VERBUNDFOLIE UND VERPACKUNG**
TEAR-PROOF PACKAGING COMPOSITE FILM AND PACKAGING
FILM COMPOSITE D'EMBALLAGE RÉSISTANT À LA DÉCHIRURE ET EMBALLAGE

(30) Priorität: 29.09.2009 DE 102009043310
(43) Veröffentlichungstag der Anmeldung: 08.08.2012
(73) Patentinhaber: Constantia Hueck Folien GmbH & Co. KG, 92712 Pirk (DE)
(72) Erfinder: FRISCHMANN, Stefan, 92648 Vohenstrauß (DE); KICK, Markus, 92648 Vohenstrauß (DE); KACZMAREK, Dirk, 92637 Weiden (DE)
(74) Vertreter: Rau, Schneck & Hübner
(86) Internationale Anmeldenummer: PCT/EP2010/063784
(87) Internationale Veröffentlichungsnummer: WO 2011/039067

(56) Entgegenhaltungen:
- EP-A2- 0 769 369
- WO-A1-95/08440
- JP-A- 2005 119 710
- US-A1- 2009 008 820

## Beschreibung

Die Erfindung betrifft eine Verpackungs-Verbundfolie mit einer Außenseite und einer Innenseite sowie eine mit einer solchen Verpackungs-Verbundfolie realisierte Verpackung.

Derartige Verpackungs-Verbundfolien kommen beispielsweise zum Verschließen von Behältern oder Verpackungen für Arzneimittelprodukte, wie beispielsweise Blisterverpackungen, zum Einsatz. Bei der Verpackung besonders starker Medikamente bestehen sehr hohe Anforderungen an die Sicherheit. Dies gilt auch für die dabei verwendeten Verpackungs-Verbundfolien. Es wird insbesondere eine hohe Kindersicherheit gefordert. Kinder sollen solche Verpackungen vor allem auch durch Beißen nicht öffnen können.

Andererseits wird gefordert, dass sich die Medikamente durch ältere Personen oder durch Personen mit einem eingeschränkten Koordinationsvermögen trotzdem ohne größere Probleme den Verpackungen entnehmen lassen. Die Verpackungen einschließlich ihrer Verpackungs-Verbundfolien sollen also auch seniorenfreundlich sein.

In der JP 2005 119 710 A wird eine Verpackungs-Verbundfolie beschrieben, bei der in einem Randbereich ein Öffnungsabschnitt vorgesehen ist. Innerhalb dieses Öffnungsabschnitts befinden sich Teilbereiche mit von der Innenseite der Verpackungs-Verbundfolie ausgehenden Perforationen sowie ein weiterer Teilbereich mit einer wasserlöslichen Zwischenschicht. Diese bekannte Verpackungs-Verbundfolie ist für Lebensmittelverpackungen, nicht aber zur kindersicheren und seniorenfreundlichen Verpackung von Arzneimittelprodukten bestimmt.

Weiterhin wird in der US 5 786 092 A eine Verpackungs-Verbundfolie in Form eines Schichtverbunds aus einem wasserlöslichen Substrat, einer peelfähigen (abziehbaren) Zwischenschicht und einer wasserunlöslichen Deckschicht beschrieben. Auch diese Verpackungs-Verbundfolie eignet sich nicht zur kindersicheren und seniorenfreundlichen Verpackung von Arzneimittelprodukten.

In der EP 1 468 817 A1 und in der EP 1 655 237 A1 wird jeweils eine Verpackungs-Verbundfolie für eine Blisterverpackung zur kindersicheren und seniorenfreundlichen Verpackung von Medikamenten und medizinischen Produkten beschrieben. Diese Verpackungs-Verbundfolie besteht aus einer Aluminiumfolie als Innenlage, die außenseitig z.B. mit einer Decklage aus Papier oder aus einer Polyester (PET)-Folie und innenseitig mit einer Kunststofffolie, z.B. aus Polyvinylchlorid (PVC), Polyvinylidenchlorid (PVDC), Polypropylen (PP), Polyester (PET) oder Polychlortrifluorethylen (PCTFE), versehen ist. Die innenseitige Kunststofffolie kann optional monoaxial oder biaxial gereckt sein.

Eine mit einer solchen Verpackungs-Verbundfolie verschlossene (Blister-) Verpackung erfüllt zwar die geforderte Kindersicherheit, lässt sich aber nur schwer, insbesondere nur mit einem der Verpackung beigefügten Werkzeug, beispielsweise einem kleinen Skalpell, öffnen. Derartige Schneidewerkzeuge dürfen aber nicht überall, z.B. in Flugzeugen, mitgeführt werden, so dass es dort zu Problemen beim Öffnen der Verpackung kommen kann.

Eine Aufgabe der Erfindung besteht deshalb darin, eine Verpackungs-Verbundfolie der eingangs bezeichneten Art anzugeben, die sowohl kindersicher als auch seniorenfreundlich ist, und sich insbesondere einfach öffnen lässt.

Diese Aufgabe wird durch eine Verpackungs-Verbundfolie gemäß den Merkmalen des Hauptanspnichs gelöst. Die erfindungsgemäße Verpackungs-Verbundfolie umfasst mindestens eine der Außenseite zugewandte Decklage, eine der Innenseite zugewandte Innenlage, die eine geringere Durchstoß- und Reißfestigkeit aufweist als die Decklage, und eine zwischen der Decklage und der Innenlage angeordnete flüssigkeitslösliche Zwischenschicht. Zum Transport von Flüssigkeit von der Außenseite zu der flüssigkeitslöslichen Zwischenschicht sind außerdem Flüssigkeits-Transportöffnungen vorgesehen, die zumindest die Decklage vollständig durchdringen und sich in Richtung der Innenseite mindestens bis zu der Zwischenschicht erstrecken, ohne die Innenlage zu erfassen.

Die erfindungsgemäße Verpackungs-Verbundfolie hat aufgrund der Decklage eine sehr hohe mechanische Stabilität und Festigkeit, so dass mittels dieser Verpäckungs-Verbundfolie eine kindersichere Verpackung insbesondere für ein Arzneimittelprodukt realisiert werden kann. Die Verpackungs-Verbundfolie weist diese ausgezeichneten mechanischen Eigenschaften im trockenen Zustand auf. Der Verbund ist in diesem Zustand festgefügt.

Diese feste Fügung lässt sich dadurch lösen, dass die Zwischenschicht mit einer Flüssigkeit in Kontakt gebracht wird. Dies erfolgt mittels der Flüssig-keits-Transportöffnungen, die, z.B. in Form von Sacklöchern, durch die Decklage hindurchreichen und sich mindestens bis zu der flüssigkeitslöslichen Zwischenschicht erstrecken. Die insbesondere aus einem flüssigkeitsundurchlässigen Material bestehende Decklage ist dann aufgrund der Flüssigkeits-Transportöffnungen trotzdem flüssigkeitsdurchlässig. Gelangt die Flüssigkeit durch die Flüssigkeits-Transportöffnungen in Kontakt mit der Zwischensicht, löst sich diese zumindest teilweise auf. Insbesondere lässt die Haftkraft innerhalb der Verpackungs-Verbundfolie nach, so dass die Decklage ohne große Anstrengung abgezogen (abgepeelt) werden kann. Dadurch verliert die Verpackungs-Verbundfolie ihre hohe Durchstoß- und Reißfestigkeit. Die verbleibende Innenlage hat verglichen mit der Decklage nur eine deutlich geringere mechanische Festigkeit. Insbesondere lässt sich die Innenlage nach dem Abziehen der Decklage ohne weiteres durchstoßen oder einreißen, um auf diese Weise an den Inhalt einer mit der Verpackungs-Verbundfolie verschlossenen Verpackung zu gelangen.

Nachdem die Verpackungs-Verbundfolie mit Flüssigkeit in Kontakt gebracht worden ist, beispielsweise durch ein einfaches Eintauchen in eine Flüssigkeit, lässt sich eine mittels der Verpackungs-Verbundfolie verschlossene Verpackung also sehr leicht und insbesondere ohne Verwendung eines Schneidewerkzeugs öffnen. Neben der Kindersicherheit ist also auch eine Seniorenfreundlichkeit gegeben.

Die Flüssigkeits-Transportöffnungen stellen insbesondere keine durchgängige Perforation durch die Verpackungs-Verbundfolie dar. Die Innenlage ist vollkommen unberührt von diesen Flüssigkeits-Transportöffnungen, so dass mittels der Verpackungs-Verbundfolie aufgrund der vorzugsweise flüssigkeitsundurchlässigen Innenlage trotz der flüssigkeitsdurchlässigen Decklage eine flüssigkeitsdichte Verpackung einer Ware möglich ist.

Gemäß einer bevorzugten Ausgestaltung ist die flüssigkeitslösliche Zwischensicht auf Basis von Zellulose, von einem Aminoharz, von einem hydrophilen Acrylat, von einem insbesondere azetalisierten Polyvinylalkohol (PVOH), von einem Polyvinylazetal oder von einem Gluten gebildet. Diese Stoffe haben die im Rahmen der erfindungsgemäßen Verpackung-Verbundfolie gewünschte flüssigkeitslösliche Eigenschaft. Außerdem sind diese Materialien frei verfügbar und lassen sich einfach in eine Verbundfolie als Zwischenschicht integrieren.

Gemäß einer weiteren bevorzugten Ausgestaltung ist die flüssigkeitslösliche Zwischensicht als eine gesonderte von der Verpackungs-Verbundfolie hergestellte und nach ihrer Herstellung in die Verpackungs-Verbundfolie eingebettete Folienlage, insbesondere also als eine gesonderte Folie, mit einer Dicke von vorzugsweise zwischen 5 µm und 200 µm ausgeführt. In dieser Ausgestaltung kann die folienartig ausgebildete Zwischenschicht also ein Zukaufprodukt sein, das im Rahmen der Herstellung der Verpackungs-Verbundfolie als gesonderte Lage eingefügt wird. Dadurch ist eine sehr einfache und schnelle Herstellung der Verpackungs-Verbundfolie möglich. Mit dieser Ausgestaltung lassen sich auch vergleichsweise große Schichtdicken der Zwischenschicht erzeugen. Die Zeitdauer des Auflösens der Zwischenschicht hängt unter anderem auch von deren Schichtdicke ab, so dass die Schichtdicke also auch ein Designparameter für die Dauer des Auflösens ist.

Gemäß einer weiteren bevorzugten Ausgestaltung ist die flüssigkeitslösliche Zwischenschicht als Beschichtungslage, insbesondere als Lack-, Leim-, Film- oder Koextrusionsbeschichtung, mit einer Dicke von vorzugsweise zwischen 1 µm und 10 µm, bevorzugt zwischen 3 µm und 4 µm, ausgebildet. Die Zwischenschicht wird in dieser Ausgestaltung also erst im Rahmen der Herstellung der Verpackungs-Verbundfolie hergestellt, beispielsweise mittels Kaschieren, Lackieren, insbesondere Lackieren mittels einer Breitschlitzdüse (sog. "curtain coating"), Tief-, Flexo- oder Sieb-druck. Dadurch lassen sich sehr dünne Schichtdicken realisieren, so dass nur wenig Flüssigkeit notwendig ist, um eine Auflösung des Verbunds herbeizuführen und ein Abziehen der Decklage zu ermöglichen. Außerdem lässt sich mit dieser Ausgestaltung auch die Gesamtdicke der Verpackungs-Verbundfolie reduzieren.

Gemäß einer weiteren günstigen Ausgestaltung handelt es sich bei der Flüssigkeit, die die Zwischenschicht löst, um Wasser. Die Zwischenschicht ist dann also wasserlöslich. Dies ist besonders günstig, da Wasser meistens verfügbar ist. Die Befeuchtung der Zwischenschicht ist dann sehr einfach und praktisch jederzeit möglich. Dies kann beispielsweise auch über das Eintauchen in ein - eigentlich zum Verzehr bestimmtes - Getränk erfolgen. Grundsätzlich kann anstelle von Wasser aber auch eine andere Flüssigkeit zum Einsatz kommen, um die Haftkraft im Verbund der Verpackungs-Verbundfolie zu lösen.

Gemäß einer weiteren bevorzugten Ausgestaltung ist die Innenlage aus Aluminium mit einer Dicke von vorzugsweise zwischen 5 µm und 80 µm gebildet. Derartige Aluminiumfolien sind ein weit verbreiteter Basiswerkstoff für Verpackungs-Verbundfolien. Sie sind ebenfalls frei verfügbar und zeichnen sich durch die geforderten Eigenschaften, wie eine verglichen mit der Decklage niedrigere Durchstoß- und Reißfestigkeit sowie eine Flüssigkeitsundurchlässigkeit aus. Grundsätzlich können harte und weiche Aluminiumfolien zum Einsatz kommen, wobei eine Aluminiumfolie als "hart" bezeichnet wird, wenn sie nach dem Walzen nicht geglüht worden ist. Die resultierende Aluminiumfolie knistert und reißt leichter als eine Aluminiumfolie, die nach dem Walzen noch einem Glühprozess unterzogen worden ist und die man demnach als "weich" bezeichnet. Bevorzugt ist eine nach dem Walzen nochmals geglühte, also eine weiche, Aluminiumfolie, da dadurch die Durchstoß- und Reißfestigkeit des Verbunds der Verpackungs-Verbundfolie erhöht werden kann.

Gemäß einer weiteren bevorzugten Ausgestaltung ist die Decklage aus einem Kunststoffmaterial gebildet, insbesondere aus einem Polyester (PET, Polyethylenterephthalat), einem vorzugsweise orientierten Polyamid (oPA) oder einem Polyvinylchlorid (PVC), und hat eine Dicke von vorzugsweise zwischen 5 µm und 100 µm. Diese Materialien eignen sich besonders gut für die Decklage. Sie haben eine vergleichsweise hohe Durchstoß- und Reißfestigkeit und gewährleisten somit, dass eine mittels der Verpackungs-Verbundfolie hergestellte Verpackung im trockenen Zustand nicht ohne Hilfsmittel geöffnet werden kann.

Gemäß einer weiteren günstigen Ausgestaltung ist zwischen der flüssigkeitslöslichen Zwischenschicht und der Innenlage eine vollflächige Haftvermittlungsschicht angeordnet, die insbesondere aus zwei übereinander angeordneten vollflächigen Teilschichten, vorzugsweise aus einer Kaschierkleberteilschicht und aus einer Primerteilschicht, aufgebaut ist. Dadurch wird eine besonders gute Haftung zwischen der Innenlage und der Zwischenschicht erreicht.

Gemäß einer weiteren bevorzugten Ausgestaltung haben alle Flüssigkeits-Transportöffnungen zusammengenommen einen Flächenanteil von zwischen 2 % und 10 % einer Gesamtfläche der Verpackungs-Verbundfolie. Durch den Flächenanteil der Flüssigkeits-Transportöffnungen lässt sich die Geschwindigkeit einstellen, mit der die Haftwirkung im Verbund der Verpackungs-Verbundfolie bei einem Flüssigkeitskontakt aufgelöst wird. Bei einem zu geringen Flächenanteil dauert dieser Vorgang zu lange oder führt überhaupt nicht zu dem gewünschten Resultat. Bei einem zu großen Flächenanteil besteht dagegen die Gefahr, dass Flüssigkeit ungewollt an die Zwischenschicht gelangt und damit ein zu frühes oder zu schnelles Ablösen der Decklage resultiert, so dass die geforderte Kindersicherheit nicht mehr gegeben ist. Insbesondere sollte der Kontakt mit Speichel, wenn ein Kind auf eine mit der Verpackungs-Verbundfolie verschlossenen Verpackung beißt, nicht ohne weiteres dazu führen, dass die Decklage abgezogen werden kann. Es hat sich herausgestellt, dass ein Flächenanteil der Flüssigkeits-Transportöffnungen in dem genannten Bereich zwischen 2 % und 10 % beiden widerstrebenden Tendenzen sehr gut gerecht wird. Mit einem derartigen Flächenanteil lässt sich zum einen die Decklage nach einem gezielten Flüssigkeitskontakt schnell ablösen, wobei zum anderen ein ungewünschtes Ablösen der Decklage bei einem zufälligen Flüssigkeitskontakt noch ausreichend gut verhindert wird.

Gemäß einer weiteren günstigen Ausgestaltung haben die Flüssigkeits-Transportöffnungen einen runden, insbesondere punktförmigen, oder strichförmigen Querschnitt und sind insbesondere gleichmäßig über eine Gesamtfläche der Verpackungs-Verbundfolie verteilt angeordnet. Bei dieser geometrischen Ausgestaltung und Verteilung der Flüssigkeits-Transportöffnungen wird erreicht, dass die Haftwirkung im Verbund der Verpackungs-Verbundfolie praktisch überall und weitgehend gleichmäßig nach einem gezielten Flüssigkeitskontakt aufgelöst wird. Grundsätzlich sind aber auch andere geometrische Querschnittsformen für die Flüssigkeits-Transportöffnungen denkbar. So können diese auch eine besondere grafische Gestalt, beispielsweise die eines Firmenlogos oder eines Produktnamens, annehmen. Neben der funktionellen Eigenschaft, die Flüssigkeit zu der Zwischenschicht zu transportieren, erfüllen die Flüssigkeits-Transportöffnungen dann auch eine kennzeichnende oder informative Funktion.

Gemäß einer weiteren günstigen Ausgestaltung ist die Innenlage innenseitig mit einer vollflächigen Siegelschicht, insbesondere einer Heißsiegellackschicht, versehen. Dadurch wird erreicht, dass die Verpackungs-Verbundfolie unmittelbar zur Versiegelung eines Verpackungs-Behälters herangezogen werden kann. Der vollflächige Auftrag der Heißsiegellackschicht an der Innenseite ermöglicht eine größtmögliche Flexibilität im Hinblick auf die Form und Größe des Randes eines zu verschließenden Behälters.

Gemäß einer weiteren günstigen Ausgestaltung ist die Decklage außenseitig mit einer flüssigkeitsdurchlässigen und insbesondere einen Bitterstoff enthaltenden Außenlage versehen. Aufgrund der Flüssigkeitsdurchlässigkeit wird erreicht, dass eine Flüssigkeit auch diese Außenlage durchdringen und so zu der maßgeblichen Zwischenschicht gelangen kann. Der vorzugsweise in der Außenlage als Bestandteil vorgesehene Bitterstoff hält Kinder davon ab, eine mit der Verpackungs-Verbundfolie verschlossene Verpackung in den Mund zu nehmen oder zumindest über einen längeren Zeitraum im Mund zu behalten, so dass ein zu langer Kontakt mit dem Speichel möglich wäre und es deshalb zu einer in diesem Fall unerwünschten Reduzierung der Haftwirkung im Verbund der Verpackungs-Verbundfolie kommt. Der Bitterstoff kann optional auch in der Decklage als Bestandteil enthalten sein.

Vorzugsweise ist die flüssigkeitsdurchlässige Außenlage aus einem flüssigkeitsdurchlässigen Material, wie beispielsweise aus Papier, gebildet. Eine derartige äußere Papierbeschichtung ist üblich. Sie ermöglicht in einfacher Weise, Informationen, grafische Ausgestaltungen und/oder Herkunftshinweise auf die Verpackungs-Verbundfolie aufzudrucken. Mit einer äußeren Papierbeschichtung hat die Verpackungs-Verbundfolie eine Optik und Haptik, die - trotz des intern deutlich abweichenden Aufbaus - ähnlich sind wie bei bereits bekannten Verpackungs-Verbundfolien für kindersichere und seniorenfreundliche Verpackungen.

Gemäß einer weiteren günstigen Ausgestaltung durchdringen die Flüssigkeits-Transportöffnungen auch die flüssigkeitsdurchlässige Außenlage vollständig. Dadurch wird der Transport der Flüssigkeit zu der maßgeblichen Zwischenlage erleichtert oder überhaupt erst gewährleistet. Letzteres ist insbesondere dann der Fall, wenn die flüssigkeitsdurchlässige Außenlage gemäß einer weiteren Ausgestaltung aus einem Kunststoffmaterial, wie beispielsweise aus einem Polyester, gebildet ist. Die Außenlage kann also auch aus einem flüssigkeitsundurchlässigen Material gebildet sein. Die Flüssigkeitsdurchlässigkeit wird dann, ähnlich wie bei der Decklage, durch die durchgehenden Flüssigkeits-Transportöffnungen gewährleistet.

Eine weitere Aufgabe der Erfindung besteht darin, eine Verpackung der eingangs bezeichneten Art anzugeben, die kindersicher und seniorenfreundlich ist und sich insbesondere einfach öffnen lässt.

Diese weitere Aufgabe wird durch eine Verpackung gemäß den Merkmalen des Anspruchs 15 gelöst. Die erfindungsgemäße Verpackung umfasst ein Formteil, das mindestens eine Aufnahme zum Aufnehmen mindestens eines zu verpackenden Guts enthält sowie eine erfindungsgemäße Verpackungs-Verbundfolie gemäß einer der vorstehend beschriebenen Ausgestaltungen zum Verschließen der mindestens einen Aufnahme, wobei die Innenseite der Verpackungs-Verbundfolie dem verpackten Gut zugewandt ist.

Die erfindungsgemäße Verpackung kann insbesondere als eine Blisterverpackung ausgeführt sein. Bei dem zu verpackenden Gut kann es sich beispielsweise um ein Medikament oder um ein anderes sicher zu verwahrendes medizinisches Produkt handeln. Die erfindungsgemäße Verpackung weist die gleichen Vorteile auf, die vorstehend bereits im Zusammenhang mit der erfindungsgemäßen Verpackungs-Verbundfolie erläutert worden sind. Gleichfalls können für die erfindungsgemäße Verpackung die gleichen vorteilhaften Ausgestaltungen angegeben werden wie für die erfindungsgemäße Verpackungs-Verbundfolie.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: einen Schnitt durch ein erstes Ausführungsbeispiel einer Verpackungs-Verbundfolie mit einer flüssigkeitslöslichen Zwischenschicht,
- Fig. 2: eine Draufsicht auf die Außenseite der Verpackungs-Verbundfolie gemäß Fig. 1,
- Fig. 3: eine Draufsicht von der Innenseite auf die Verpackungs-Verbundfolie gemäß Fig. 1,
- Fig. 4: einen Schnitt durch ein zweites Ausführungsbeispiel einer Verpackungs-Verbundfolie mit einer flüssigkeitslöslichen Zwischenschicht und einer unperforierten Außenlage, und
- Fig. 5: ein Ausführungsbeispiel einer mittels der Verpackung-Verbundfolie gemäß Fig. 1 bis 3 oder gemäß Fig. 4 realisierten kindersicheren und seniorenfreundlichen Verpackung in einer Querschnittsdarstellung.

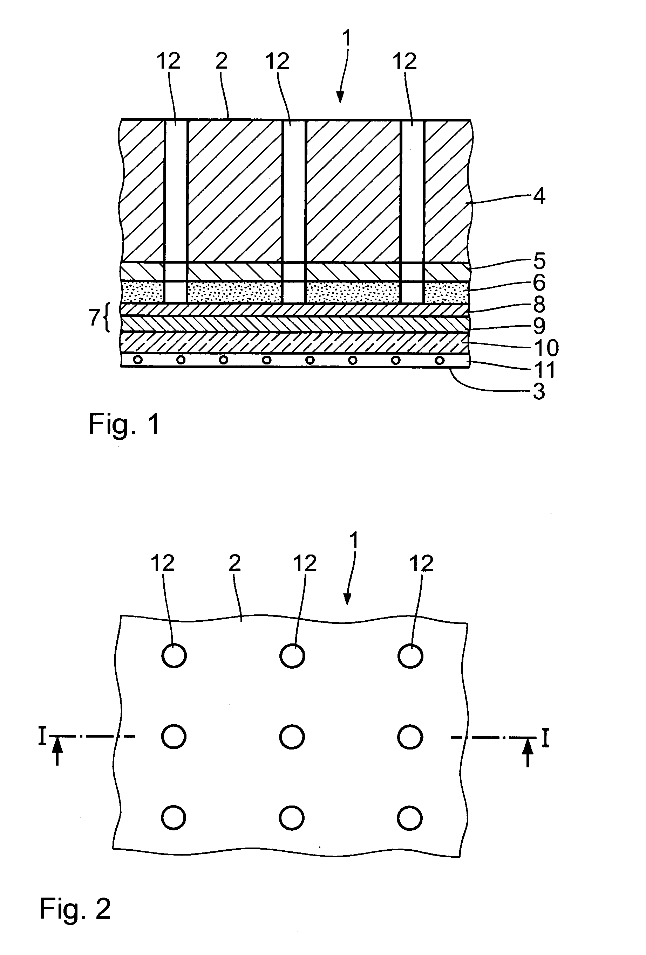

Einander entsprechende Teile sind in den Fig. 1 bis 5 mit denselben Bezugszeichen versehen. Auch Einzelheiten der im Folgenden näher erläuterten Ausführungsbeispiele können für sich genommen eine Erfindung darstellen oder Teil eines Erfindungsgegenstandes sein.

In Fig. 1 bis 3 ist ein erstes Ausführungsbeispiel einer Verpackungs-Verbundfolie 1 mit einer Außenseite 2 und einer Innenseite 3 dargestellt. Der in Fig. 1 gezeigte Schnitt ist in Fig. 2 durch die Schnittlinie I - I angedeutet. Die Verpackungs-Verbundfolie 1 ist insbesondere ein Schichtverbund aus mehreren Lagen. Sie umfasst ausgehend von der Außenseite 2 einen Schichtaufbau mit einer Außenlage 4, einer mechanisch stabilen, insbesondere sehr durchstoß- und reißfesten, Decklage 5, einer flüssigkeitslöslichen Zwischenschicht 6, einer zweischichtigen Haftvermittlungsschicht 7 mit einer Kaschierkleberteilschicht 8 und einer Primerteilschicht 9, einer Innenlage 10 und einer innenseitig angeordneten vollflächigen Heißsiegellackschicht 11. Abgesehen von Flüssigkeits-Transportöffnungen 12 sind alle Schichten 4 bis 11 insbesondere vollflächig ausgeführt.

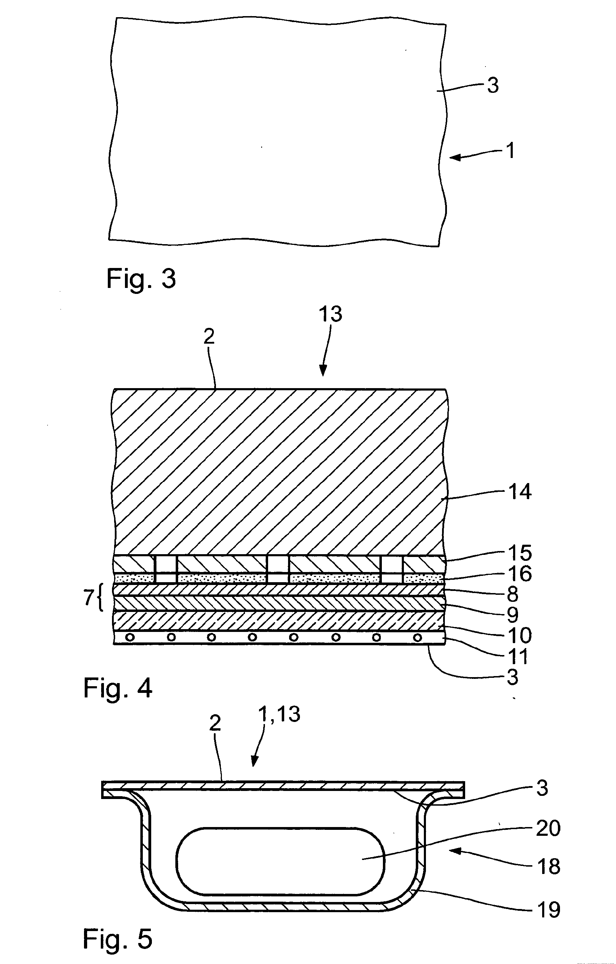

Die Flüssigkeits-Transportöffnungen 12 erstrecken sich ausgehend von der Außenseite 2 bis zur flüssigkeitslöslichen Zwischenschicht 6. Insbesondere durchdringen sie die Außenlage 4 und die Decklage 5 komplett. Beim gezeigten Ausführungsbeispiel durchdringen die Flüssigkeits-Transportöffnungen 12 auch die Zwischenschicht 6 vollständig. Insgesamt sind die Flüssigkeits-Transportöffnungen 12 als Sacklöcher ausgebildet. Sie enden mit der Zwischenschicht 6. Insbesondere erfassen sie die Innenlage 10 nicht. Die Flüssigkeits-Transportöffnungen 12 haben einen aus der Draufsicht von außen gemäß Fig. 2 ersichtlichen runden Querschnitt. Gemäß der in Fig. 3 gezeigten Draufsicht von unten bzw. innen reichen die Flüssigkeits-Transportöffnungen 12 nicht bis an die Innenseite 3. Grundsätzlich können die Flüssigkeits-Transportöffnungen 12 auch noch die Haftvermittlungsschicht 7 vollständig durchdringen und erst unmittelbar an der Innenlage 10 enden. Auch bei diesem nicht gezeigten alternativen Ausführungsbeispiel wird die Innenlage 10 also nicht von den Flüssigkeits-Transportöffnungen 12 erfasst.

Die Flüssigkeits-Transportöffnungen 12 sind bezogen auf die Oberfläche an der Außenseite 2 gleichmäßig verteilt angeordnet. Der Flächenanteil aller Flüssigkeits-Transportöffnungen 12 zusammengenommen beträgt bei dem gezeigten Ausführungsbeispiel 6 % der Gesamtfläche der Veipackungs-Verbundfolie 1 an der Außenseite 2.

Die Flüssigkeits-Transportöffnungen 12 erstrecken sich in Dickenrichtung der Verpackungs-Verbundfolie 1 beim gezeigten Ausführungsbeispiel bis zur Grenze zwischen der Zwischenschicht 6 und der Haftvermittlungsschicht 7. Es sind aber auch andere Ausgestaltungen mit hiervon abweichenden Lochtiefen der Flüssigkeits-Transportöffnungen 12 möglich. So können die Flüssigkeits-Transportöffnungen 12 bereits im Bereich der Zwischenschicht 6 oder auch erst im Bereich der Haftvermittlungsschicht 7 enden. Grundsätzlich können die Böden der als Sacklöcher ausgestalteten Flüssigkeits-Transportöffnungen 12 an einer beliebigen Stelle zwischen der der Decklage 5 zugewandten Oberfläche der Zwischenschicht 6 und der der Haftvermittlungsschicht 7 zugewandten Oberfläche der Trennlage 10 angeordnet sein.

Die Außenlage 4 ist bei dem gezeigten Ausführungsbeispiel aus einem Polyester-Material gebildet, das an und für sich flüssigkeitsundurchlässig ist. Aufgrund der Flüssigkeits-Transportöffnungen 12 wird die Außenlage 4 aber ebenfalls durchlässig für eine Flüssigkeit wie zum Beispiel Wasser. Die Außenlage hat eine Schichtdicke von 50 µm.

Die Decklage 5 besteht beim gezeigten Ausführungsbeispiel ebenfalls aus einem an und für sich flüssigkeitsundurchlässigen Polyester-Material. Aufgrund der Flüssigkeits-Transportöffnungen 12 kann aber Flüssigkeit auch durch die Decklage 5 hindurchdringen und zur unterhalb der Decklage 5 angeordneten Zwischenschicht 6 gelangen. Die Decklage 5 weist eine Schichtdicke von 12 µm auf.

Zwischen der Außenlage 4 und der Decklage 5 kann bei Bedarf eine dünne Schicht aus Kaschierlack vorgesehen sein, um eine Haftung zwischen diesen beiden Lagen 4 und 5 zu gewährleisten.

Die Zwischenschicht 6 ist flüssigkeitslöslich, insbesondere wasserlöslich ausgeführt. Sie besteht aus einem azetalisierten Polyvinylalkohol (PVOH). Bei dem Ausführungsbeispiel gemäß Fig. 1 bis 3 ist die Zwischenschicht 6 als gesonderte Folie mit einer Schichtdicke von 35 µm ausgeführt. Die Zwischenschicht 6 ist also eine gesondert hergestellte wasserlösliche PVOH-Folie.

Die Haftvermittlungsschicht 7 dient zur Verbindung zwischen der Zwischenschicht 6 und der als Aluminium-Folie mit einer Foliendicke von 20 µm ausgeführten Innenlage 10. An der der Innenseite 3 zugewandten Unterseite der Innenlage 10 ist die ganzflächige Heißsiegellackschicht 11 vorgesehen. Deren ganzflächiger Auftrag erleichtert die Herstellung verglichen mit Ausgestaltungen beim Stand der Technik, bei denen Aussparungen in den dort vorgesehenen Heißsiegellackschichten vorhanden sind.

Der Verbund aus den verschiedenen Schichtlagen der Verpackungs-Verbundfolie 1 ist in trockenem Zustand fest. Die mechanischen Eigenschaften der Verpackungs-Verbundfolie 1 werden in diesem Zustand vor allem durch die Decklage 5 bestimmt, die sich durch eine besonders hohe mechanische Durchstoß- und Reißfestigkeit auszeichnet. Insbesondere sind diese Festigkeiten bei der Decklage 5 deutlich stärker ausgebildet als bei der Innenlage 10. Die hohe mechanische Stabilität gilt für die gesamte Verpackungs-Verbundfolie 1, so lange diese in sich fest zusammenhaftet.

Dies ist aber nur in trockenem oder weitgehend trockenem Zustand gewährleistet. Kommt die Verpackungs-Verbundfolie 1 mit Flüssigkeit, insbesondere mit Wasser, in Kontakt, ändern sich der Zusammenhalt im Verbund der Verpackungs-Verbundfolie 1 und damit auch die mechanischen Eigenschaften. Die Flüssigkeit gelangt über die Flüssigkeits-Transportöffnungen 12 zu der flüssigkeitslöslichen Zwischenschicht 6, die durch die eindringende Flüssigkeit in ihren mechanischen Eigenschaften verändert wird. Die Struktur der Zwischenschicht 6 löst sich unter dem Einfluss der eindringenden Flüssigkeit zumindest teilweise auf. Dadurch verringert sich sowohl der innere Zusammenhalt innerhalb der Zwischenschicht 6 als auch das Haftvermögen in Bezug auf die angrenzenden Schichten, also die Decklage 5 und die Haftvermittlungsschicht 7. Aufgrund dieser flüssigkeitsbedingten Auf- bzw. Anlösung der Zwischenschicht 6 kann die für die mechanische Stabilität der Verpackungs-Verbundfolie 1 maßgebliche Decklage 5 zusammen mit der außen angeordneten Außenlage 4 ohne besondere Anstrengungen abgezogen (gepeelt) werden. Der zurückbleibende Teil der Verpackungs-Verbundfolie 1 hat dann eine deutlich reduzierte mechanische Stabilität. Insbesondere kann die Aluminium-Folie der Innenlage 10 ohne weiteres durchstoßen oder auch durchgerissen werden.

Die Verpackungs-Verbundfolie 1 hat also in trockenem Zustand eine sehr hohe mechanische Stabilität, wohingegen nach einem Kontakt mit Flüssigkeit diese mechanische Stabilität deutlich reduziert ist. Insofern eignet sich diese Verpackungs-Verbundfolie 1 sehr gut zur Realisierung einer kindersicheren und seniorenfreundlichen Verpackung, in der beispielsweise Medikamente oder andere besonders schützenswerte Produkte verpackt sind.

In Fig. 4 ist ein Schnitt durch ein zweites Ausführungsbeispiel einer Verpackungs-Verbundfolie 13 dargestellt, die sich ebenfalls zur Realisierung einer kindersicheren, aber trotzdem leicht zu öffnenden und damit seniorenfreundlichen Verpackung eignet. Deren Aufbau ist ähnlich wie bei der Verpackungs-Verbundfolie 1 gemäß Fig. 1 bis 3.

Ein Unterschied besteht in der Außenlage 14, die bei der Verpackungs-Verbundfolie 13 als Schicht aus Kraftpapier mit einem spezifischen Gewicht von 40 g/m² ausgeführt ist. Die Außenlage 14 enthält einen Bitterstoff, um Kinder davon abzuhalten, die Verpackungs-Verbundfolie 13 und eine damit realisierte Verpackung in den Mund zu nehmen - zumindest über einen längeren Zeitraum.

In der Schichtfolge der Verpackungs-Verbundfolie 13 schließt sich an die Außenlage 14 eine Decklage 15 an, die ebenfalls aus Polyester (PET) besteht, eine Schichtdicke von 12 µm aufweist und genau wie bei der Verpackungs-Verbundfolie 1 maßgeblich die mechanische Stabilität im trockenen Zustand bestimmt. Auf die Decklage 15 folgt eine wiederum flüssigkeitslösliche Zwischensicht 16, die bei diesem Ausführungsbeispiel aber nicht als gesonderte Folie, sondern als Beschichtungslage aus PVOH ausgeführt ist. Diese Zwischensicht 16 ist beispielsweise mittels einer Kaschier-, Lackier-, Tiefdruck-, Flexodmck- oder Siebdrucktechnik aufgetragen. Sie hat eine geringere Schichtdicke, die bei diesem Ausführungsbeispiel nur etwa 3,5 µm beträgt. Die gleichmäßig über die Gesamtfläche der Verpackungs-Verbundfolie 13 angeordneten Flüssigkeits-Transportöffnungen 17 erstrecken sich bei diesem Ausführungsbeispiel nur innerhalb der Decklage 15 und der Zwischenschicht 16. Die Außenlage 14 ist aufgrund des vorgesehenen Papiermaterials bereits ohnehin flüssigkeitsdurchlässig. Ein Transfer von Flüssigkeit von der Außenseite 2 hin zu der Decklage 15 und vor allem zu der Zwischenschicht 16 ist auch ohne gesonderte Flüssigkeits-Transportkanäle innerhalb der Außenlage 14 möglich.

Die Teilschichtfolge, die sich unterhalb der Zwischenschicht 16 anschließt, entspricht der bei der Verpackungs-Verbundfolie 1 gemäß Fig. 1 bis 3.

Die Funktionsweise der Verpackungs-Verbundfolie 13 ist im Wesentlichen genau wie bei der Verpackungs-Verbundfolie 1. Auch hier ist ein fester und mechanisch stabiler Verbund zwischen den Einzelschichten in trockenem Zustand gewährleistet, wohingegen der Zusammenhalt im Bereich der flüssigkeitslöslichen Zwischenschicht 16 geschwächt wird, sobald diese mit einer Flüssigkeit in Kontakt gelangt. Die auf die Decklage 15 wirkende Haftkraft lässt stark nach, so dass nach einer entsprechenden Durchfeuchtung der Zwischenschicht 16 die Decklage 15 zusammen mit der Außenlage 14 wiederum ohne Schwierigkeiten abgezogen werden kann.

Mittels der Verpackungs-Verbundfolien 1 und 13 kann eine in Fig. 5 in einer Querschnittsdarstellung gezeigte kindersichere und seniorenfreundliche Verpackung 18 realisiert werden. Die Verpackungs-Verbundfolie 1 bzw. 13 ist mittels der Heißsiegellackschicht 11 auf einem Kunststoffbehälter 19 fest aufgebracht. Der Kunststoffbehälter 19 ist ein Formteil mit einer Aufnahme für ein pharmazeutisches Produkt, z.B. eine Tablette 20. Die Innenseite 3 der Verpackungs-Verbundfolie 1 bzw. 13 ist dabei der Tablette 20 zugewandt. Die Verpackung 18 ist eine Blisterverpackung.

Aufgrund der in trockenem Zustand besonderes stabilen mechanischen Eigenschaften der Verpackungs-Verbundfolie 1 bzw. 13 erfüllt die Verpackung 18 die Anforderungen der einschlägigen Klasse F1. Dies bedeutet, dass 80 % der als Testpersonen eingesetzten Kinder, denen eine solche Verpackung 18 übergeben wurde, innerhalb von zehn Minuten (fünf Minuten vor und fünf Minuten nach Demonstration des Öffnungsmechanismus) nicht in der Lage sind, die Tablette 20 aus der Verpackung 18 zu entnehmen. Ein Erwachsener ist dagegen z.B. aufgrund des direkt an der Verpackung 18 oder auf einer Umverpackung angebrachten Hinweises zur Befeuchtung der Verpackungs-Verbundfolie 1 bzw. 13 ohne weiteres in der Lage, die Verpackung 18 zu öffnen. Hierfür ist keine besondere Geschicklichkeit erforderlich, so dass dies auch für Menschen mit einem eingeschränkten Koordinationsvermögen, beispielsweise älteren Menschen, problemlos möglich ist.

## Patentansprüche

1. Verpackungs-Verbundfolie mit einer Außenseite (2) und einer Innenseite (3), umfassend mindestens
a) eine der Außenseite (2) zugewandte Decklage (5; 15),
b) eine der Innenseite (3) zugewandte Innenlage (10), die eine geringere Durchstoß- und Reißfestigkeit aufweist als die Decklage (5; 15), und
c) eine zwischen der Decklage (5; 15) und der Innenlage (10) angeordnete flüssigkeitslösliche Zwischenschicht (6; 16),
wobei
d) zum Transport von Flüssigkeit von der Außenseite (2) zu der flüssigkeitslöslichen Zwischenschicht (6; 16) Flüssigkeits-Transportöffnungen (12; 17) vorgesehen sind, die zumindest die Decklage (5; 15) vollständig durchdringen und sich in Richtung der Innenseite (3) mindestens bis zu der Zwischenschicht (6; 16) erstrecken, ohne die Innenlage (10) zu erfassen.

2. Verpackungs-Verbundfolie nach Anspruch 1, **dadurch gekennzeichnet, dass** die flüssigkeitslösliche Zwischenschicht (6; 16) auf Basis von Zellulose, von einem Aminoharz, von einem hydrophilen Acrylat, von einem insbesondere azetalysierten Polyvinylalkohol, von einem Polyvinylazetal oder von einem Gluten gebildet ist.

3. Verpackungs-Verbundfolie nach Aspruch 1 oder 2, **dadurch gekennzeichnet, dass** die flüssigkeitslösliche Zwischenschicht (6) als eine gesondert von der Verpackungs-Verbundfolie (1) hergestellte und nach ihrer Herstellung in die Verpackungs-Verbundfolie (1) eingebettete Folienlage, mit einer Dicke von vorzugsweise zwischen 5 µm und 200 µm ausgeführt ist.

4. Verpackungs-Verbundfolie nach einem der Ansprüche 1 und 2, **dadurch gekennzeichnet, dass** die flüssigkeitslösliche Zwischenschicht (16) als Beschichtungslage, insbesondere als Lack-, Leim-, Film- oder Koextrusionsbeschichtung, mit einer Dicke von vorzugsweise zwischen 1 µm und 10 µm, bevorzugt zwischen 3 µm und 4 µm, ausgebildet ist.

5. Verpackungs-Verbundfolie nach einem der vorhergehenden Ansprüche, **dadurch gekennzeichnet, dass** die flüssigkeitslösliche Zwischenschicht (6; 16) wasserlöslich ist.

6. Verpackungs-Verbundfolie nach einem der vorhergehenden Ansprüche, **dadurch gekennzeichnet, dass** die Innenlage (10) aus Aluminium mit einer Dicke von vorzugsweise zwischen 5 µm und 80 µm gebildet ist.

7. Verpackungs-Verbundfolie nach einem der vorhergehenden Ansprüche, **dadurch gekennzeichnet, dass** die Decklage (5; 15) aus einem Kunststoffmaterial, insbesondere aus einem Polyester, einem vorzugsweise orientiertem Polyamid oder einem Polyvinylchlorid, mit einer Dicke von vorzugsweise zwischen 5 µm und 100 µm gebildet ist.

8. Verpackungs-Verbundfolie nach einem der vorhergehenden Ansprüche, **dadurch gekennzeichnet, dass** zwischen der flüssigkeitslöslichen Zwischenschicht (6; 16) und der Innenlage (10) eine vollflächige Haftvermittlungsschicht (7) angeordnet ist, die insbesondere aus zwei übereinander angeordneten vollflächigen Teilschichten, vorzugsweise aus einer Kaschierkleberteilschicht (8) und aus einer Primerteilschicht (9), aufgebaut ist.

9. Verpackungs-Verbundfolie nach einem der vorhergehenden Ansprüche, **dadurch gekennzeichnet, dass** alle Flüssigkeits-Transportöffnungen (12; 17) zusammen genommen einen Flächenanteil von zwischen 2% und 10% einer Gesamtfläche der Verpackungs-Verbundfolie (1; 13) haben.

10. Verpackungs-Verbundfolie nach einem der vorhergehenden Ansprüche, **dadurch gekennzeichnet, dass** die Flüssigkeits-Transportöff nungen (12; 17) einen runden oder strichförmigen Querschnitt haben und insbesondere gleichmäßig verteilt über eine Gesamtfläche der Verpackungs-Verbundfolie (1; 13) angeordnet sind.

11. Verpackungs-Verbundfolie nach einem der vorhergehenden Ansprüche, **dadurch gekennzeichnet, dass** die Innenlage (10) innenseitig mit einer vollflächigen Siegelschicht, insbesondere einer Heißsiegellackschicht (11), versehen ist.

12. Verpackungs-Verbundfolie nach einem der vorhergehenden Ansprüche, **dadurch gekennzeichnet, dass** die Decklage (5; 15) außenseitig mit einer flüssigkeitsdurchlässigen und insbesondere einen Bitterstoff enthaltenden Außenlage (4; 14) versehen ist.

13. Verpackungs-Verbundfolie nach Anspruch 12, **dadurch gekennzeichnet, dass** die flüssigkeitsdurchlässige Außenlage (14) aus einem flüssigkeitsdurchlässigen Material, vorzugsweise aus Papier, gebildet ist.

14. Verpackungs-Verbundfolie nach Anspruch 12 oder 13, **dadurch gekennzeichnet, dass** die Flüssigkeits-Transportöffnungen (12) auch die flüssigkeitsdurchlässige Außenlage (4) vollständig durchdringen, und die flüssigkeitsdurchlässige Außenlage (4) insbesondere aus einem Kunststoffmaterial, vorzugsweise aus einem Polyester, gebildet ist.

15. Verpackung mit
a) einem Formteil (19), das mindestens eine Aufnahme zum Aufnehmen mindestens eines zu verpackenden Guts (20) aufweist, und
b) einer Verpackungs-Verbundfolie (1; 13) nach einem der vorherigen Ansprüche zum Verschließen der mindestens einen Aufnahme, wobei die Innenseite (3) der Verpackungs-Verbundfolie (1; 13) dem verpackten Gut (20) zugewandt ist.

## Claims

1. Packaging composite film with an outside (2) and an inside (3), comprising at least
a) a cover layer (5; 15) facing the outside (2),
b) an inner layer (10), which faces the inside (3) and has a lower puncture and tear resistance than the cover layer (5; 15), and
c) a liquid-soluble intermediate layer (6; 16) arranged between the cover layer (5; 15) and the inner layer (10),
wherein
d) to transport liquid from the outside (2) to the liquid-soluble intermediate layer (6; 16), liquid-transporting openings (12; 17) are provided, which completely penetrate at least the cover layer (5; 15) and extend in the direction of the inside (3) at least to the intermediate layer (6; 16), without including the inner layer (3).

2. Packaging composite film according to claim 1, **characterized in that** the liquid-soluble intermediate layer (6; 16) is formed based on cellulose, an amino resin, a hydrophilic acrylate, an, in particular, acetalized polyvinyl alcohol, a polyvinyl acetal or a gluten.

3. Packaging composite film according to claim 1 or 2, **characterized in that** the liquid-soluble intermediate layer (6) is configured as a film layer, which is produced separately from the packaging composite film (1) and embedded after its production in the packaging composite film (1), with a thickness of preferably between 5 µm and 200 µm.

4. Packaging composite film according to either of claims 1 or 2, **characterized in that** the liquid-soluble intermediate layer (6) is configured as a coating layer, in particular as a lacquer coating, glue coating, film coating or coextrusion coating, with a thickness of preferably between 1 µm and 10 µm, preferably between 3 µm and 4 µm.

5. Packaging composite film according to any one of the preceding claims, **characterized in that** the liquid-soluble intermediate layer (6; 16) is water-soluble.

6. Packaging composite film according to any one of the preceding claims, **characterized in that** the inner layer (10) is formed from aluminum with a thickness of preferably between 5 µm and 80 µm.

7. Packaging composite film according to any one of the preceding claims, **characterized in that** the cover layer (5; 15) is formed from a plastics material, in particular from a polyester, a preferably oriented polyamide or a polyvinyl chloride, with a thickness of preferably between 5 µm and 100 µm.

8. Packaging composite film according to any one of the preceding claims, **characterized in that** arranged between the liquid-soluble intermediate layer (6; 16) and the inner layer (10) is a whole-area adhesive layer (7), which is constructed, in particular from two whole-area part layers arranged one above the other, preferably from a laminating adhesive part layer (8) and from a primer part layer (9).

9. Packaging composite film according to any one of the preceding claims, **characterized in that** all the liquid-transporting openings (12; 17) taken together have an area proportion of between 2% and 10% of a total area of the packaging composite film (1; 13).

10. Packaging composite film according to any one of the preceding claims, **characterized in that** the liquid-transporting openings (12; 17) have a round or dash-like cross section and are, in particular, arranged uniformly distributed over a total area of the packaging composite film (1; 13).

11. Packaging composite film according to any one of the preceding claims, **characterized in that** the inner layer (10) is provided on the inside with a whole-area sealing layer, in particular a heat-sealing lacquer layer (11).

12. Packaging composite film according to any one of the preceding claims, **characterized in that** the cover layer (5; 15) is provided on the outside with a liquid-permeable, and in particular a bitter substancecontaining, outer layer (4; 14).

13. Packaging composite film according to claim 12, **characterized in that** the liquid-permeable outer layer (14) is formed from a liquid-permeable material, preferably from paper.

14. Packaging composite film according to claim 12 or 13, **characterized in that** the liquid-transporting openings (12) also completely penetrate the liquid-permeable outer layer (4), and the liquid-permeable outer layer (4) is, in particular, formed from a plastics material, preferably a polyester.

15. Packaging with
a) a molded part (19), which has at least one receptacle to receive at least one product (20) to be packaged and
b) a packaging composite film (1; 13) according to any one of the preceding claims for closing the at least one receptacle, wherein the inside (3) of the packaging composite film (1; 13) faces the product (20) to be packaged.

## Revendications

1. Film composite d'emballage, comprenant une face externe (2) et une face interne (3), comportant au moins
a) une couche de couverture (5 ; 15) orientée vers la face externe (2),
b) une couche interne (10) orientée vers la face interne (3), qui présente une résistance à la perforation et à la déchirure moins élevée que la couche de couverture (5 ; 15), et
c) une couche intermédiaire (6 ; 16) soluble dans des liquides disposée entre la couche de couverture (5 ; 15) et la couche interne (10),
où
d) des orifices de transport de liquide (12 ; 17) sont prévus pour le transport de liquides à partir de la face externe (2) vers la couche intermédiaire soluble dans des liquides (6 ; 16), qui traversent totalement au moins la couche de couverture (5 ; 15) et s'étendent en direction de la face interne (3) au moins jusqu'à la couche intermédiaire (6 ; 16), sans toucher la couche interne (10).

2. Film composite d'emballage selon la revendication 1 **caractérisé en ce que** la couche intermédiaire soluble dans des liquides (6 ; 16) est constituée à base de cellulose, d'une résine amine, d'un acrylate hydrophile, d'un alcool polyvinylique en particulier acétalisé, d'un polyvinylacétal ou d'un gluten.

3. Film composite d'emballage selon les revendications 1 ou 2 **caractérisé en ce que** la couche intermédiaire soluble dans des liquides (6) est conçue sous la forme d'une couche de film, fabriquée séparément du film composite d'emballage (1), et ensevelie dans le film composite d'emballage (1) après sa fabrication, comportant une épaisseur de préférence entre 5 µm et 200 µm.

4. Film composite d'emballage selon l'une des revendications 1 et 2 **caractérisé en ce que** la couche intermédiaire soluble dans des liquides (16) est conçue sous la forme d'une couche de recouvrement, en particulier un recouvrement sous forme de vernis, de matière collante, de film ou par co-extrusion, comprenant une épaisseur entre 3 µm et 4 µm.

5. Film composite d'emballage selon l'une des revendications précédentes **caractérisé en ce que** la couche intermédiaire soluble dans des liquides (6 ; 16) est soluble dans l'eau.

6. Film composite d'emballage selon l'une des revendications précédentes **caractérisé en ce que** la couche interne (10) est constituée d'aluminium avec une épaisseur de préférence entre 5 µm et 80 µm.

7. Film composite d'emballage selon l'une des revendications précédentes **caractérisé en ce que** la couche de couverture (5 ; 15) est constituée d'un matériau en matière synthétique, en particulier d'un polyester, d'un polyamide, de préférence orienté, ou d'un chlorure de polyvinyle, avec une épaisseur de préférence entre 5 µm et 100 µm.

8. Film composite d'emballage selon l'une des revendications précédentes **caractérisé en ce qu**'une couche de promoteur d'adhésion (7) est disposée sur toute la surface entre la couche intermédiaire soluble dans les liquides (6 ; 16) et la couche interne (10), qui est en particulier constituée de deux couches partielles disposées sur toute leur surface l'une sur l'autre, de préférence construite à partir d'une couche partielle de colle de masquage (8) et d'une couche partielle de primaire (9).

9. Film composite d'emballage selon l'une des revendications précédentes **caractérisé en ce que** l'ensemble de tous les orifices de transport de liquide (12 ; 17) constitue une proportion de surface entre 2 % et 10 % de la surface totale du film composite d'emballage (1 ; 13).

10. Film composite d'emballage selon l'une des revendications précédentes **caractérisé en ce que** les orifices de transport de liquide (12 ; 17) possèdent une section circulaire ou en forme de fente et sont en particulier distribués de manière uniforme sur une surface totale du film composite d'emballage (1 ; 13).

11. Film composite d'emballage selon l'une des revendications précédentes **caractérisé en ce que** la couche interne (10) est pourvue sur sa face interne d'une couche de scellement sur toute la surface, en particulier d'une couche de vernis de scellement à chaud (11).

12. Film composite d'emballage selon l'une des revendications précédentes **caractérisé en ce que** la couche de couverture (5 ; 15) est pourvue sur sa face externe d'une couche externe (4 ; 14) perméable aux liquides et contenant en particulier une matière amère.

13. Film composite d'emballage selon la revendication 12 **caractérisée en ce que** la couche externe (14) perméable aux liquides est formée par un matériau perméable aux liquides, de préférence en papier.

14. Film composite d'emballage selon les revendications 12 ou 13 **caractérisé en ce que** les orifices de transport de liquide (12) traversent également totalement la couche externe perméable aux liquides (4) et que la couche externe perméable aux liquides (4) est en particulier constituée d'un matériau en matière synthétique, de préférence d'un polyester.

15. Emballage comprenant
a) une pièce moulée (19) qui présente au moins un réceptacle pour l'admission d'un produit (20) à emballer, et
b) un film composite d'emballage (1 ; 13) selon l'une des revendications précédentes pour la fermeture d'au moins un réceptacle, la face interne (3) du film composite d'emballage (1 ; 13) étant orientée vers le produit (20) emballé.
